# EUROPÄISCHE PATENTANMELDUNG

(11) **EP 3 290 282 A1**
(43) Veröffentlichungstag der Anmeldung: **07.03.2018**
(21) Anmeldenummer: 17185495.3
(22) Anmeldetag: 09.08.2017
(51) Int. Cl.: B60W 30/06, B60W 50/14

(54) **VERFAHREN UND FAHRERASSISTENZSYSTEM ZUR UNTERSTÜTZUNG EINES FAHRERS EINES FAHRZEUGS**

(30) Priorität: 01.09.2016 DE 102016216523
(71) Anmelder: Robert Bosch GmbH, 70442 Stuttgart (DE)
(72) Erfinder: Brochhaus, Markus, 70195 Stuttgart (DE); Engelhardt, Markus, 70193 Stuttgart (DE)

(57) **Zusammenfassung**

Die Erfindung betrifft ein Verfahren zur Unterstützung eines Fahrers eines Fahrzeugs (1), wobei Abstandssensoren (14) des Fahrzeugs (1) Abstände zwischen dem Fahrzeug (1) und Objekten in der Umgebung ermitteln, die Abstände mit zumindest einer Warngrenze verglichen werden und bei Unterschreitung der Warngrenze eine Aktion erfolgt. Ferner ist vorgesehen, dass eine Position des Fahrzeugs (1) übermittelt wird, die Position an eine externe Datenverarbeitungseinrichtung (100) übermittelt wird und von der externen Datenverarbeitungseinrichtung (100) eine an die übermittelte Position angepasste Warngrenze empfangen wird, wobei für den Vergleich der Abstände die angepasste Warngrenze verwendet wird. Weitere Aspekte der Erfindung betreffen Computerprogramme, ein Fahrerassistenzsystem und eine externe Datenverarbeitungseinrichtung, die zur Ausführung des Verfahrens eingerichtet sind.

## Beschreibung

### Stand der Technik

Die Erfindung betrifft ein Verfahren zur Unterstützung eines Fahrers eines Fahrzeugs, wobei Abstandssensoren des Fahrzeugs Abstände zwischen dem Fahrzeug und Objekten in der Umgebung ermitteln, die Abstände mit einer Warngrenze verglichen werden und bei Unterschreitung der Warngrenze eine Aktion erfolgt. Weitere Aspekte der Erfindung betreffen ein Fahrerassistenzsystem, eine externe Datenverarbeitungseinrichtung, sowie Computerprogramme, welche eingerichtet sind, das Verfahren auszuführen.

Im Automobilbereich werden verschiedene Fahrerassistenzsysteme eingesetzt, die den Fahrer beim Ausführen verschiedener Fahrmanöver unterstützen sollen. Dazu gehören beispielsweise Einparkassistenten, die mit Hilfe von Abstandssensoren Abstände zwischen dem Fahrzeug und Objekten in der Umgebung ermitteln. Während eines Einparkmanövers wird mit Hilfe der Abstandssensoren die Umgebung überwacht und die ermittelten Abstände werden mit einer Warngrenze verglichen. Wird ein Objekt erkannt, dessen Abstand zum Fahrzeug diese Warngrenze unterschreitet, kann eine Aktion eingeleitet werden. Die Aktion kann beispielsweise in der Einleitung eines Bremseingriffs, eines Ausweichmanövers oder in der Ausgabe eines Warnsignals bestehen.

Aus DE 10 2009 029 770 A1 ist eine Abstandswarneinrichtung und Einparkhilfe für ein Kraftfahrzeug bekannt. Die Abstandswarneinrichtung umfasst eine Einrichtung zum Bestimmen des Abstands eines Hindernisses und eine Einrichtung zum Warnen des Fahrers beim Unterschreiten eines vorgegebenen Mindestabstands mittels eines Warnsignals. Dabei ist vorgesehen, dass der vorgegebene Mindestabstand einstellbar ist. Die Abstandswarneinrichtung weist eine Einstelleinrichtung zum Einstellen des Mindestabstands auf, wobei eine Betätigung der Einstelleinrichtung mit einer ersten Betätigungsdauer den Mindestabstand um einen vorgegebenen Wert verringert und den um den vorgegebenen Wert verringerten Mindestabstand als neuen Mindestabstand abspeichert. Eine Betätigung der Einstelleinrichtung für eine zweite Betätigungsdauer setzt die Mindestabstände auf die ursprünglich vorgegebenen Werte zurück.

Aus DE 10 2012 211 368 A1 ist ein Verfahren zur Unterstützung eines Fahrers eines Fahrzeugs mit einem Fahrerassistenzsystem bekannt. Dabei ist vorgesehen, Abstände zwischen dem Fahrzeug und einem Objekt in der Umgebung des Fahrzeugs zu ermitteln, den Abstand mit mindestens einer Warngrenze zu vergleichen und bei Unterschreiten der mindestens einen Warngrenze eine Aktion einzuleiten, wobei die mindestens eine Warngrenze in Abhängigkeit von Vorgaben des jeweiligen Fahrers und/oder vom Ort, an dem sich das Fahrzeug befindet, eingestellt wird. Zur ortsabhängigen Einstellung der Warngrenze ist vorgesehen, dass das Fahrzeug seine Position mit Hilfe von Navigationssatelliten ermittelt und eine für den jeweiligen Ort festgelegte Warngrenze verwendet.

Nachteilig an den aus dem Stand der Technik bekannten Fahrerassistenzsystemen ist, dass ortsangepasste Warngrenzen zumindest einmalig durch den Fahrer des Fahrzeugs vorgegeben werden müssen. Dieses Verfahren ist aufwendig und bei einem erstmaligen Aufsuchen eines Ortes stehen dem Fahrer noch keine optimierten Warngrenzen zur Verfügung.

### Offenbarung der Erfindung

Es wird ein Verfahren zur Unterstützung eines Fahrers eines Fahrzeugs vorgeschlagen, wobei Abstandssensoren des Fahrzeugs Abstände zwischen dem Fahrzeug und Objekten in der Umgebung des Fahrzeugs ermitteln, die Abstände mit mindestens einer Warngrenze verglichen werden und bei Unterschreitung der mindestens einen Warngrenze eine Aktion erfolgt. Die Schritte des Ermittelns der Abstände, das Vergleichen der Abstände mit einer Warngrenze und das Einleiten einer Aktion bei Unterschreitung der Warngrenze werden periodisch ausgeführt. Ferner ist vorgesehen, dass eine Position des Fahrzeugs ermittelt wird, die Position an eine externe Datenverarbeitungseinrichtung übermittelt wird und von der externen Datenverarbeitungseinrichtung mindestens eine an die übermittelte Position angepasste Warngrenze empfangen wird. Die empfangene mindestens eine angepasste Warngrenze wird nach einem Umschalten für den Vergleich der Abstände verwendet, wobei das Umschalten entweder sofort nach dem Empfang der mindestens einen angepassten Warngrenze erfolgt oder die Umschaltung dann ausgeführt wird, wenn eine vorgegebene Standardwarngrenze bei dem Vergleich der Abstände unterschritten wird.

Bei den Abstandssensoren handelt es sich beispielsweise um übliche im Zusammenhang mit einem Fahrerassistenzsystem eingesetzte Abstandssensoren wie beispielsweise Ultraschallsensoren, Radarsensoren oder Lidarsensoren. Mit Hilfe dieser Sensoren ist es möglich, Objekte in der Umgebung eines Fahrzeugs zu erkennen und deren Abstand zu dem Abstandssensor bzw. zu dem Fahrzeug zu bestimmen. Die ermittelten Abstände zu den Objekten werden mit der Warngrenze verglichen und bei Unterschreitung der Warngrenze wird eine Aktion ausgelöst. Diese Aktion ist beispielsweise ausgewählt aus dem Ausgeben einer Warnung, einem Lenkeingriff und/oder einem Bremseingriff.

Das Ausgeben einer Warnung kann beispielsweise optisch, akustisch oder haptisch erfolgen. Eine optische Warnung kann beispielsweise über eine Anzeige auf einem Bildschirm oder über eine Leuchtanzeige erfolgen. Eine akustische Warnung kann beispielsweise in Form von Tönen oder einer Sprachdurchsage über einen Lautsprecher ausgegeben werden. Eine haptische Warnung kann beispielsweise in Form einer Vibration des Lenkrads erfolgen.

Zum Einleiten eines Lenkeingriffs kann beispielsweise das Fahrerassistenzsystem über eine Verbindung zu einer Servolenkung des Fahrzeugs verfügen und einen Lenkwinkel des Fahrzeugs derart verändern, dass eine Kollision mit einem durch die Abstandssensoren erkannten Objekt vermieden wird. Ebenso kann ein Bremseingriff erfolgen, indem das Fahrerassistenzsystem über eine Verbindung zu den Bremsen des Fahrzeugs verfügt und bei einer kritischen Annäherung an ein erkanntes Objekt eine Bremsung des Fahrzeugs auslöst.

In einer Ausführungsform ist genau eine Warngrenze vorgesehen. In einer anderen Ausführungsform sind mehrere verschiedene Warngrenzen vorgesehen, wobei jede der Warngrenzen mit einer anderen Aktion verknüpft sein kann. Beispielsweise kann eine erste Warngrenze vorgegeben werden, bei deren Unterschreitung eine akustische Warnung ausgelöst wird und eine zweite Warngrenze vorgegeben werden, bei der ein Bremseingriff ausgeführt wird.

Des Weiteren ist es möglich, dass ausgehend von einer Warngrenze verschiedene Grenzwerte berechnet werden. So kann beispielsweise vorgesehen sein, dass aus einer Warngrenze zehn Grenzwerte abgeleitet werden, die eine Strecke ausgehend von einem Mindestabstand bis zur Warngrenze in gleichmäßige Abschnitte unterteilen. Der Mindestabstand stellt dabei einen vorgegebenen, mindestens einzuhaltenden Sicherheitsabstand dar, beispielsweise im Bereich von 5 bis 20 cm, der keinesfalls unterschritten werden darf. Oberhalb dieses Mindestabstands können sich dann verschiedene Grenzwerte anschließen, in denen abgestufte Warnungen ausgegeben werden. Beispielsweise können bei einer optischen Warneinrichtung beispielsweise über die Länge eines Balkens oder über die Anzahl von leuchtenden LEDs ein ausgehend von der Warngrenze noch verbleibender Abstand bis zu dem Mindestabstand signalisiert werden. Bei einer akustischen Warneinrichtung kann beispielsweise die Lautstärke, Tonhöhe oder ein zeitlicher Abstand zwischen Warntönen entsprechend dem verbleibenden Abstand zwischen der Warngrenze und dem Mindestabstand angepasst werden.

Bevor zumindest eine angepasste Warngrenze empfangen wurde, wird für den Vergleich der Abstände eine vorgegebene Standardwarngrenze verwendet. Erst nach dem Empfang zumindest einer angepassten Warngrenze wird auf die empfangene mindestens eine angepasste Warngrenze umgeschaltet und zukünftig für den Vergleich der Abstände die mindestens eine angepasste Warngrenze verwendet. Das Umschalten folgt entweder unmittelbar auf den Empfang der mindestens einen angepassten Warngrenze oder es wird erst dann auf die mindestens eine angepasste Warngrenze umgeschaltet, wenn der Abstand zu einem Objekt in der Umgebung die vorgegebene Standardwarngrenze unterschreitet. Dabei ist bevorzugt vorgesehen, dass ein sofortiges Umschalten auf die angepasste Warngrenze erfolgt, wenn diese größer ist als die vorgegebene Standardwarngrenze. Des Weiteren wird bevorzugt das Umschalten erst dann auf die mindestens eine angepasste Warngrenze ausgeführt, wenn die vorgegebene Standardwarngrenze unterschritten ist, falls die mindestens eine angepasste Warngrenze kleiner ist als die vorgegebene Standardwarngrenze.

Des Weiteren kann vorgesehen sein, dass für den Fall, dass die externe Datenverarbeitungseinrichtung nicht erreichbar ist oder für die Position des Fahrzeugs keine angepasste Warngrenze verfügbar ist, die verwendete Warngrenze auf die vorgegebene Standardwarngrenze zurückgesetzt wird.

Es kann vorgesehen sein, dass nach dem Empfangen der angepassten Warngrenze bzw. mehreren angepassten Warngrenzen über eine Benachrichtigungseinrichtung ein Hinweis über veränderte Warngrenzen ausgegeben wird. Auf diese Weise wird der Fahrer darüber in Kenntnis gesetzt, dass abhängig von dem Ort, an dem sich sein Fahrzeug befindet, eine Anpassung der Warngrenze vorgenommen wurde. Die Benachrichtigungseinrichtung kann eingerichtet sein, diese Benachrichtigung optisch, akustisch oder haptisch auszugeben. Eine optische Ausgabe der Benachrichtigung kann beispielsweise auf einem Display des Fahrzeugs oder über eine Signalleuchte erfolgen. Eine akustische Ausgabe kann beispielsweise über einen Signalton oder über eine Sprachausgabe erfolgen und eine haptische Ausgabe kann beispielsweise über ein kurzes Vibrieren des Lenkrades erfolgen.

Das Bestimmen der Position des Fahrzeugs erfolgt bevorzugt in Verbindung mit einem Navigationssystem des Fahrzeugs, welches mit dem Fahrerassistenzsystem in Verbindung steht. Das Navigationssystem des Fahrzeugs kann beispielsweise ein Satellitennavigationssystem wie GPS, GLONASS oder Galileo zur Bestimmung der Fahrzeugposition verwenden. Des Weiteren können beispielsweise Signale von Mobilfunkbasisstationen und/oder WLAN-Funknetzen zur Positionsbestimmung eingesetzt werden. Des Weiteren ist es denkbar, dass über am Fahrzeug angeordnete Kameras Bilder der Umgebung des Fahrzeugs erfasst werden und durch Erkennen von charakteristischen Merkmalen in den Bildern die Position des Fahrzeugs bestimmt wird.

Die Schritte zur Bestimmung der Warngrenze bzw. der Warngrenzen werden bevorzugt nach Ablauf einer vorgegebenen Zeitspanne und/oder nach Bewegung des Fahrzeugs um eine vorgegebene Strecke wiederholt. Dabei kann die vorgegebene Zeitspanne für eine periodische Wiederholung der Bestimmung der Warngrenze von der Zeitspanne, mit der die Abstandssensoren ihre Messung wiederholen, abweichen. Wird als Kriterium für das Wiederholen der Bestimmung der Warngrenze eine Bewegung des Fahrzeugs um eine vorgegebene Strecke verwendet, so wird die zurückgelegte Strecke beispielsweise ebenfalls über das Navigationssystem bestimmt, wobei zusätzlich oder alternativ oder Odometriesensoren des Fahrzeugs eingesetzt werden können, um die zurückgelegte Wegstrecke zu bestimmen.

Bei einer Wiederholung des Bestimmens der Warngrenze wird erneut die Position des Fahrzeugs bestimmt, an die externe Datenverarbeitungseinrichtung übermittelt und von der externen Datenverarbeitungseinrichtung die angepasste Warngrenze empfangen.

Bevorzugt ist vorgesehen, dass die vorgegebene Zeitspanne und/oder die vorgegebene Strecke, die für eine Wiederholung der Bestimmung der Warngrenze maßgeblich ist, abhängig von der Position des Fahrzeugs durch die externe Datenverarbeitungseinrichtung vorgegeben werden. Hierbei wird nach dem Übermitteln der Fahrzeugposition an die externe Datenverarbeitungseinrichtung nicht nur eine angepasste Warngrenze empfangen, sondern auch eine für die ermittelte Fahrzeugposition vorgegebene Zeitspanne bzw. vorgegebene Strecke empfangen.

Bei der externen Datenverarbeitungseinrichtung handelt es sich beispielsweise um eine Computereinrichtung wie einen Server, insbesondere einen Cloud-Server, der eine Datenbank umfasst, bei der geografische Positionen angepasste Warngrenzen zugeordnet sind. Die externe Datenverarbeitungseinrichtung ist ferner eingerichtet, mit dem Fahrzeug zu kommunizieren. Die externe Datenverarbeitungseinrichtung ist bevorzugt stationär ausgestaltet und vom Fahrzeug räumlich getrennt angeordnet.

Bevorzugt erfolgt die Kommunikation zwischen dem Fahrerassistenzsystem des Fahrzeugs und der externen Datenverarbeitungseinrichtung über das Internet, wobei bevorzugt eine drahtlose Internetverbindung verwendet wird. Dabei verfügt sowohl die externe Datenverarbeitungseinrichtung über eine Internetverbindung, als auch das jeweilige Fahrzeug. Das Fahrzeug kann eine drahtlose Internetverbindung beispielsweise über ein Mobilfunknetz, wie beispielsweise Mobilfunknetze die auf GSM, UMTS oder LTE basieren. Des Weiteren ist es möglich, andere Verbindungsarten, wie beispielsweise WLAN oder Bluetooth einzusetzen. Über WLAN- oder Bluetooth-Basisstationen kann insbesondere auch in geschlossenen Gebäuden, wie beispielsweise Parkhäuser oder Tiefgaragen eine Internetverbindung hergestellt werden, wobei diese Basisstationen zusätzlich auch zur Positionsbestimmung des Fahrzeugs eingesetzt werden können.

Die in der Datenbank der externen Datenverarbeitungseinrichtung abgespeicherten Warngrenzen können insbesondere für beliebte Orte wie beispielsweise Parkhäuser oder Parkplätze durch die jeweiligen Betreiber festgelegt und in der Datenbank hinterlegt werden. Des Weiteren ist es möglich, dass ein Fahrer für einen vorgegebenen Ort über eine Bedieneinrichtung an seinem Fahrzeug eine angepasste Warngrenze eingibt, die nach der Eingabe zusammen mit einer Angabe über die Fahrzeugposition an die externe Datenverarbeitungseinrichtung übermittelt werden. Die durch den Fahrer eingegebenen und anschließend übermittelten Warngrenzen können dann, gegebenenfalls nach einer Überprüfung, in die Datenbank der externen Datenverarbeitungseinrichtung mit aufgenommen werden. Damit ist es möglich, die Datenbank der externen Datenverarbeitungseinrichtung durch Mitarbeit der einzelnen Fahrer nach und nach mit angepassten Warngrenzen zu ergänzen.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrerassistenzsystems oder eines Subsystems hiervon in einem Fahrzeug handeln oder um eine Applikation für Fahrerassistenzfunktion, welche beispielsweise vom Smartphone oder Tablet ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD, Bluray-Disc oder einem USB-Stick. Zusätzlich oder alternativ kann das Computerprogramm auf einer Computereinrichtung wie etwa auf einem Server zum Herunterladen bereitgestellt werden, zum Beispiel über ein Datennetz wie etwa das Internet oder eine Kommunikationsverbindung wie etwa eine Telefonleitung oder eine drahtlose Verbindung.

Ein weiterer Aspekt der Erfindung ist es, ein Fahrerassistenzsystem zur Unterstützung eines Fahrers eines Fahrzeugs bereitzustellen. Das vorgeschlagene Fahrerassistenzsystem umfasst mindestens einen Abstandssensor zur Bestimmung eines Abstands zu einem Objekt in der Umgebung des Fahrzeugs sowie ein Steuergerät, welches zur Ausführung eines der beschriebenen Verfahren eingerichtet ist.

Bevorzugt verfügt das Fahrerassistenzsystem über ein Navigationssystem oder über eine Verbindung zu einem Navigationssystem eines Fahrzeugs. Des Weiteren umfasst das Fahrerassistenzsystem bevorzugt eine Benachrichtigungseinrichtung, die eingerichtet ist, einen Hinweis über veränderte Warngrenzen auszugeben. Dies kann beispielsweise eine optische Anzeigeeinrichtung wie eine Signalleuchte oder ein Bildschirm sein, auf dem ein entsprechender Hinweis eingeblendet wird.

Das Fahrerassistenzsystem umfasst des Weiteren eine Kommunikationseinrichtung zur Kommunikation mit einer externen Datenverarbeitungseinrichtung. Diese kann beispielsweise in das Steuergerät integriert sein. Sie ist eingerichtet, eine drahtlose Internetverbindung herzustellen.

Da das Fahrerassistenzsystem zur Ausführung der beschriebenen Verfahren eingerichtet ist, gelten die im Rahmen der Beschreibung der Verfahren offenbarten Merkmale auch für das Fahrerassistenzsystem als offenbart.

Ein weiterer Aspekt der Erfindung ist es, eine externe Datenverarbeitungseinrichtung bereitzustellen, welche Kommunikationsmittel zur Kommunikation mit dem Fahrzeug und eine Datenbank umfasst. Die Datenbank umfasst geografischen Positionen zugeordnete Warngrenzen. Des Weiteren umfasst die Datenbank bevorzugt geografischen Positionen zugeordnete Zeitspannen und/oder vorgegebene Strecken. Die vorgegebenen Zeitspannen und/oder vorgegebenen Strecken werden verwendet, um zu bestimmen, wann ein Fahrzeug das Verfahren zur Bestimmung der Warngrenze erneut durchlaufen soll.

Die Kommunikationsmittel sind insbesondere eingerichtet, eine Internetverbindung herzustellen.

Die externe Datenverarbeitungseinrichtung ist bevorzugt zur Verwendung im Zusammenhang mit dem beschriebenen Verfahren eingerichtet, so dass die im Zusammenhang mit dem Verfahren beschriebenen Merkmale der externen Datenverarbeitungseinrichtung entsprechend gelten.

### Vorteile der Erfindung

Durch das vorgeschlagene Verfahren erhält ein Nutzer eines Fahrerassistenzsystems, welches mit Abstandssensoren Abstände zu Objekten in der Umgebung ermittelt, die Abstände mit einer Warngrenze vergleicht und beim Unterschreiten der Warngrenze eine Aktion auslöst, einen gesteigerten Nutzwert, da die Warngrenze automatisch an die jeweilige Situation angepasst wird. Befindet sich das Fahrzeug beispielsweise in einer engen Tiefgarage, kann durch die externe Datenverarbeitungseinrichtung eine verringerte Warngrenze übermittelt werden, so dass der Warnabstand bewusst gegenüber einem Standardwarnabstand verringert wird. Hierdurch wird vermieden, dass der Fahrer auch bei Einhalten einer optimalen Parkposition durch das Fahrerassistenzsystem gewarnt wird oder ein Bremseingriff erfolgt. Dennoch bleibt die Schutzfunktion des Assistenzsystems vor unerwartet auftretenden Hindernissen, die auch die verringerte Warngrenze unterschreiten, erhalten. Die Akzeptanz des Fahrerassistenzsystems durch den Fahrer wird erheblich gesteigert, da unnötige Warnungen vermieden werden und nur tatsächlich relevante Hindernisse eine Warnung auslösen.

Durch das positionsabhängige Vorgeben der Warngrenze ist ein manuelles Vorgeben angepasster Warngrenzen durch den Fahrer nicht erforderlich. Der Fahrer wird hierdurch entlastet.

Des Weiteren ist es durch die positionsabhängige Vorgabe der Warngrenze möglich, auch innerhalb eines Parkhauses oder einer Tiefgarage unterschiedliche Warngrenzen vorzugeben. So ist es beispielsweise möglich, im Bereich von Zufahrtswegen und Rampen die mindestens eine Warngrenze auf einem als Standardwarngrenze vorgegebenen Standardwert zu belassen und nur bei Annäherung an eine Parkbucht gezielt zu verringern. Umgekehrt ist es denkbar, in Bereichen, bei denen höhere Geschwindigkeiten gefahren werden, wie beispielsweise breiten Zufahrten, die Warngrenze gezielt zu vergrößern, so dass trotz der höheren Geschwindigkeiten rechtzeitig eine Warnung des Fahrers erfolgt.

Des Weiteren ist es vorteilhaft möglich, dass die Datenbank der externen Datenverarbeitungseinrichtung die Nutzer des Verfahrens nach und nach ergänzt werden können. Dadurch ist es beispielsweise auch möglich, dass ein Fahrer eines Fahrzeugs für seine eigene Garage eine angepasste Warngrenze hinterlegt, die automatisch bei Annäherung an seine Garage empfangen und verwendet wird.

### Kurze Beschreibung der Zeichnungen

Die einzige Figur zeigt ein Ausführungsbeispiel der Erfindung, welches in der nachfolgenden Beschreibung näher erläutert wird.

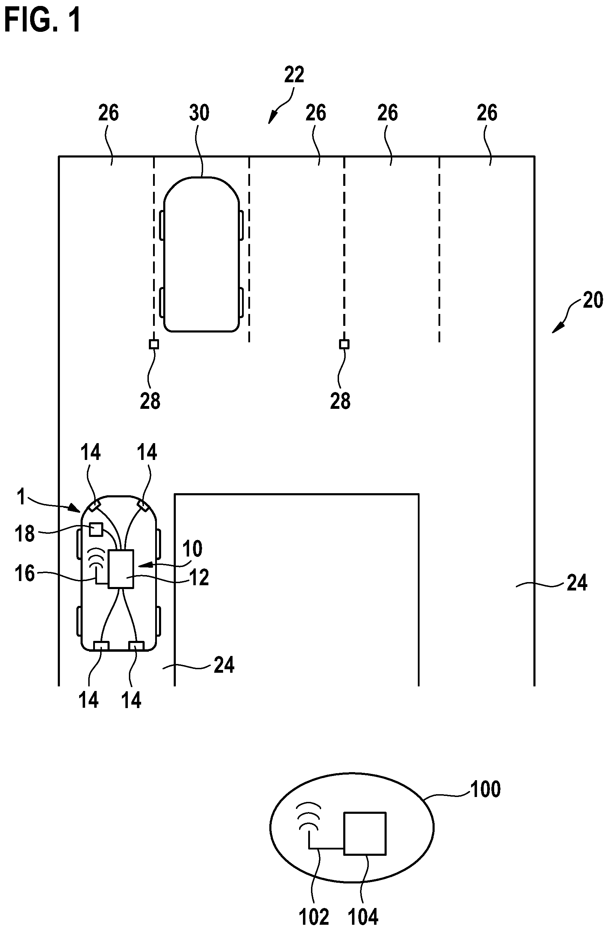

Die Figur 1 zeigt schematisch ein mit einem Fahrerassistenzsystem ausgerüstetes Fahrzeug auf einem Parkplatz

### Ausführungsformen der Erfindung

Figur 1 zeigt schematisch einen Parkplatz 20 mit einem Parkbereich 22. Der Parkbereich 22 verfügt über zwei Zufahrtswege 24, über die eine Zufahrt möglich ist. Der Parkbereich 22 verfügt in dem dargestellten Beispiel über fünf Stellplätze 26. Ein Fahrzeug 1 befindet sich in der in der Figur 1 dargestellten Situation auf einer der Zufahrtswege 24 und fährt auf den Parkbereich 22 zu. Das Fahrzeug 1 verfügt über ein Fahrerassistenzsystem 10, welches in dem dargestellten Ausführungsbeispiel vier Abstandssensoren 14, ein Steuergerät 12, ein Navigationssystem 18 sowie eine Kommunikationseinrichtung 16 umfasst. Die Abstandssensoren 14 ermitteln fortlaufend den Abstand zwischen dem Fahrzeug 1 und Hindernissen in der Umgebung des Fahrzeugs 1. Die Hindernisse können beispielsweise den Parkplatz 20 begrenzende Mauern oder Bepflanzungen, Poller 28 sowie auf dem Parkplatz 20 geparkte weitere Fahrzeuge 30 sein.

Das Fahrzeug 1 bestimmt seine Fahrzeugposition unter Verwendung des Navigationssystems 18. Die bestimmte Fahrzeugposition wird vom Steuergerät 12 des Fahrerassistenzsystems 10 verarbeitet und über die Kommunikationseinrichtung 16 an eine externe Datenverarbeitungseinrichtung 100 übermittelt. Dazu wird über die Kommunikationseinrichtung 16 eine drahtlose Internetverbindung mit entsprechenden Kommunikationsmitteln 102 der externen Datenverarbeitungseinrichtung 100 aufgebaut.

Die externe Datenverarbeitungseinrichtung 100 ist beispielsweise als Server, insbesondere als Cloud-Server, ausgeführt und verfügt über eine Datenbank 104, in der geografischen Positionen zugeordnete angepasste Warngrenzen abgespeichert sind. Des Weiteren umfasst die externe Datenverarbeitungseinrichtung Kommunikationsmittel 102. Die Kommunikationsmittel 102 sind eingerichtet, eine Internetverbindung herzustellen. Über die hergestellte Internetverbindung empfängt die externe Datenverarbeitungseinrichtung 100 die Fahrzeugposition des Fahrzeugs 1. Daraufhin wird aus der Datenbank 104 die dieser Fahrzeugposition zugeordnete Warngrenze abgerufen und über die Kommunikationsmittel 102 über das Internet an das Fahrzeug 1 übertragen.

Das Fahrzeug 1 empfängt über seine Kommunikationseinrichtung 16 die übermittelte angepasste Warngrenze und verwendet diese beim Vergleich der von den Abstandssensoren 14 ermittelten Abstände zu Objekten mit der Warngrenze. Gegenüber einer im Fahrerassistenzsystem 10 als Standardwert hinterlegte Standardwarngrenze kann die angepasste Warngrenze gleich groß, vergrößert oder verringert sein.

In der in Figur 1 dargestellten Situation ist der Zufahrtsweg 24 breit, so dass die in der Datenbank 104 vorhandene der geografischen Position zugeordnete angepasste Warngrenze eher groß ist, z. B. 1 m bis 2 m, um den Fahrer auch bei hohen Geschwindigkeiten eine rechtzeitige Warnung vor der Annäherung z.B. an eine den Parkplatz 20 begrenzende Mauer zu geben.

Bewegt sich das Fahrzeug 1 weiter in Richtung der Stellplätze 26, so wird die Fahrzeugposition des Fahrzeugs 1 erneut an die externe Datenverarbeitungseinrichtung 100 übermittelt. Die erneute Übermittlung wird beispielsweise dadurch veranlasst, dass sich das Fahrzeug 1 eine vorgegebene Strecke fortbewegt hat, oder dass eine vorgegebene Zeitspanne abgelaufen ist. Da die Stellplätze 26 des Parkplatzes 20 sehr eng sind und zudem auch noch Hindernisse in Form von Pollern 28 im Bereich der Stellplätze 26 vorhanden sind, wird durch die externe Datenverarbeitungseinrichtung 100 eine verringerte Warngrenze an das Fahrzeug 1 übermittelt, so dass bei Einhalten einer optimalen Einparkposition keine Warnung des Fahrers vor Annäherung an ein Hindernis erfolgt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Unterstützung eines Fahrers eines Fahrzeugs (1), wobei
a. Abstandssensoren (14) des Fahrzeugs (1) Abstände zwischen dem Fahrzeug (1) und Objekten in der Umgebung ermitteln,
b. die Abstände mit zumindest einer Warngrenze verglichen werden und
c. bei Unterschreitung der Warngrenze eine Aktion erfolgt, wobei die Schritte a) bis c) periodisch wiederholt werden,
**dadurch gekennzeichnet, dass**
d. eine Position des Fahrzeugs (1) ermittelt wird,
e. die Position an eine externe Datenverarbeitungseinrichtung (100) übermittelt wird,
f.von der externen Datenverarbeitungseinrichtung (100) zumindest eine an die übermittelte Position angepasste Warngrenze empfangen wird und
g. nach einer Umschaltung die mindestens eine angepasste Warngrenze für den Vergleich der Abstände gemäß Schritt c) verwendet wird, wobei die Umschaltung unmittelbar nach Empfang der mindestens einen angepassten Warngrenze oder nach Unterschreitung einer vorgegebenen Standardwarngrenze erfolgt.

2. Verfahren nach Anspruch 1, **dadurch gekennzeichnet, dass** nach dem Empfang der angepassten Warngrenze gemäß Schritt f) über eine Benachrichtigungseinrichtung ein Hinweis über veränderte Warngrenzen ausgegeben wird.

3. Verfahren nach Anspruch 1 oder 2, **dadurch gekennzeichnet, dass** in Schritt d) die Position des Fahrzeugs (1) über ein Navigationssystem (18) des Fahrzeugs (1) ermittelt wird.

4. Verfahren nach einem der Ansprüche 1 bis 3, **dadurch gekennzeichnet, dass** die Schritte d) bis f) nach Ablauf einer vorgegebenen Zeitspanne und/oder nach einer Bewegung des Fahrzeugs (1) um eine vorgegebene Strecke wiederholt werden.

5. Verfahren nach Anspruch 4, wobei die vorgegebene Zeitspanne und/oder die vorgegebene Strecke abhängig von der Position des Fahrzeugs (1) durch die externe Datenverarbeitungseinrichtung (100) vorgegeben werden.

6. Verfahren nach einem der Ansprüche 1 bis 5, **dadurch gekennzeichnet, dass** die Übermittlung der Position und der Empfang der angepassten Warngrenze über eine drahtlose Internetverbindung erfolgen.

7. Verfahren nach einem der Ansprüche 1 bis 6, **dadurch gekennzeichnet, dass** die in Schritt c) ausgeführte Aktion ausgewählt ist aus dem Ausgeben einer Warnung, einem Lenkeingriff und/oder einem Bremseingriff.

8. Computerprogramm, das eines der Verfahren nach einem der Ansprüche 1 bis 7 ausführt, wenn es auf einem Computer abläuft.

9. Fahrerassistenzsystem (10) zur Unterstützung eines Fahrers eines Fahrzeugs (1), umfassend mindestens einen Abstandssensor (14) zur Bestimmung eines Abstands zu einem Objekt in der Umgebung des Fahrzeugs (1), eine Kommunikationseinrichtung (16) und ein Steuergerät (12), welches zur Ausführung eines der Verfahren nach einem der Ansprüche 1 bis 7 eingerichtet ist.

10. Externe Datenverarbeitungseinrichtung (100) umfassend Kommunikationsmittel (102) zur Kommunikation mit einem Fahrzeug (1) und eine Datenbank (104), **dadurch gekennzeichnet, dass** die Datenbank (104) geografischen Positionen zugeordnete angepasste Warngrenzen aufweist und dass die Datenverarbeitungseinrichtung (100) zur Verwendung in einem der Verfahren gemäß einem der Ansprüche 1 bis 7 eingerichtet ist.
